# EUROPEAN PATENT APPLICATION

(11) **EP 2 551 041 A2**
(43) Date of publication of application: **30.01.2013**
(21) Application number: 12177679.3
(22) Date of filing: 24.07.2012
(51) Int. Cl.: B22F 3/105, B29C 67/00, B22C 9/10, B22C 9/04

(54) **Rapid casting article manufacturing**

(30) Priority: 28.07.2011 US 201113192716
(71) Applicant: United Technologies Corporation, Hartford, CT 06101 (US)
(72) Inventor: CASTLE, Lea Kennard, Vernon, CT Connecticut 06066 (US); BOCHIECHIO, Mario P., Vernon, CT Connecticut 06066 (US); VERNER, Carl R., Windsor, CT Connecticut 06095 (US); BULLIED, Steven J., Pomfret Center, CT Connecticut 06259 (US); CHITTENDEN, Kevin W., Oxford, AL Alabama 36203 (US); PINERO, Hector M., Middletown, CT Connecticut 06457 (US); KLUCHA, Agnes, Colchester, CT Connecticut 06415 (US); REITER, Michael C., South Windsor, CT Connecticut 06074 (US); MARCIN, John Joseph, Marlborough, CT Connecticut 06447 (US)
(74) Representative: Leckey, David Herbert

(57) **Abstract**

A method of manufacturing a casting article (32) for use in a casting process includes rapidly forming the casting article (32) out of a metallic material. A ceramic coating (48) is applied to an exterior surface (46) of the casting article (32).

## Description

### BACKGROUND

This disclosure generally relates to a method of manufacturing a casting article for use in a casting process.

Gas turbine engines are widely used in aircraft propulsion, electric power generation, ship propulsion and pumps. Many gas turbine engine parts are manufactured in a casting process. Investment casting is one known casting process. Investment casting can be used to form metallic parts having complex geometries, such as gas turbine engine airfoils requiring internal cooling passages. Blades and vanes are examples of such components.

Investment casting utilizes a plurality of casting articles, such as shells and cores, to manufacture a part. In general, in a time intensive process, a casting system for use in the investment casting process is prepared having one or more cavities that define a shape generally corresponding to the part to be cast. A wax pattern of the component is formed by molding wax over a core. In a shelling process, a shell is formed around one or more of the wax patterns. The wax is melted and removed. The shell is hardened in a firing process such that the casting system is formed comprising a shell having one or more part defining compartments that include the core. Typical lead times for manufacturing the casting system tooling required for conducting the investment casting process can range from 12 to 26 weeks or longer.

### SUMMARY

A method of manufacturing a casting article for use in a casting process includes rapidly forming the casting article out of metallic material. A ceramic coating is applied to an exterior surface of the casting article.

In another exemplary embodiment, a method of manufacturing a casting article for use in a casting process includes forming a first metallic layer of the casting article, adding a second metallic layer on the first layer, and adding additional metallic layers on the second metallic layer to render a net-shaped casting article. A coating is applied to an exterior surface of the net-shaped casting article.

In yet another exemplary embodiment, a casting system includes a casting article having a metallic body. The casting article is representative of a portion of the tooling of the casting system. A ceramic coating is applied to an exterior surface of the metallic body.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic view of a gas turbine engine.
Figure 2 illustrates a part that can be manufactured in a casting process.
Figure 3 illustrates a casting system.
Figure 4 schematically illustrates a method for manufacturing a casting article for use in a casting system.
Figure 5 illustrates a casting article that can be manufactured according to the method of Figure 4.

### DETAILED DESCRIPTION

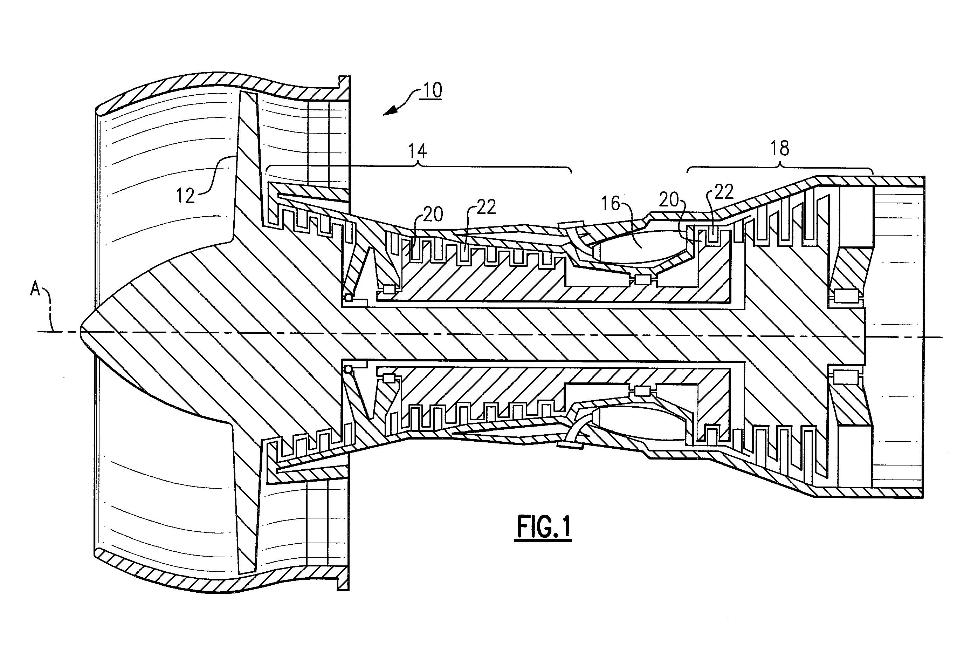

Figure 1 illustrates an example gas turbine engine 10 that is circumferentially disposed about an engine centerline axis A. The gas turbine engine 10 includes (in serial flow communication) a fan section 12, a compressor section 14, a combustor section 16 and a turbine section 18. During operation, air is compressed in the compressor section 14 and is mixed with fuel and burned in the combustor section 16. The combustion gases are discharged through the turbine section 18, which extracts energy from the combustion gases for powering the compressor section 14 and the fan section 12, among other potential loads.

The gas turbine engine 10 includes a plurality of parts that can be manufactured in a casting process, such as an investment casting process or other suitable casting process. For example, both the compressor section 14 and the turbine section 18 include numerous airfoils, such as alternating rows of rotating blades 20 and stationary vanes 22, that can be manufactured in a casting process.

This view is highly schematic and is included to provide a basic understanding of the gas turbine engine 10 and not to limit the disclosure. This disclosure extends to all types of gas turbine engines and for all types of applications.

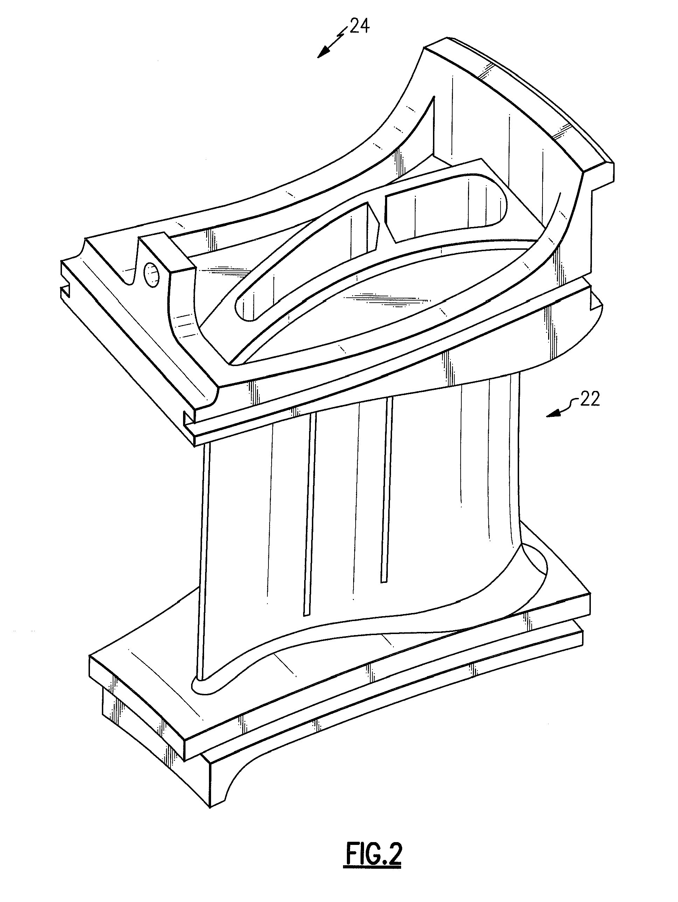

Figure 2 illustrates a part 24 that may be manufactured using a casting process, such as an investment casting process. In this example, the part 24 is a vane 22 of the turbine section 18. However, the various features and advantages of this disclosure are applicable to any cast part of a gas turbine engine, or any other part.

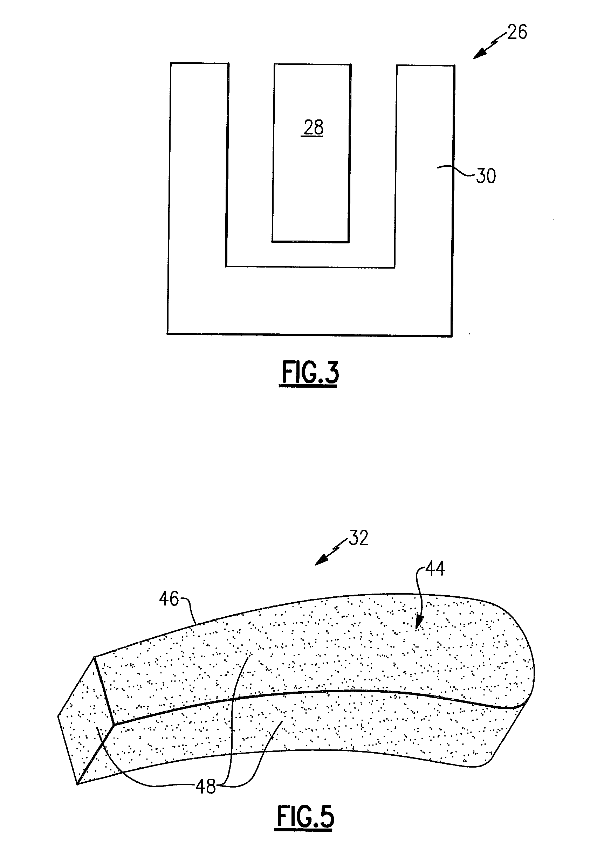

Figure 3 illustrates an example casting system 26 that can be used in a casting process to cast a part, including but not limited to, a part similar to the part 24 of Figure 2. The casting system 26 includes a core 28 and a shell 30. The core 28 is positioned and spaced relative to the shell 30 in a known manner. The core 28 creates any internal features of the part, such as cooling passages, for example. The shell 30 forms the external shape and features of the part.

In a casting process, a casting alloy is introduced into the casting system 26 to cast a part, such as by pouring, for example. Upon cooling and solidifying of the casting alloy, the part is removed from the casting system 26 as is known. Of course, this view is highly schematic and is included to provide a basic understanding of a casting system. The shape, placement and configuration of the core 28 and the shell 30 and any other tooling of the casting system 26 will vary depending upon the type of part being cast.

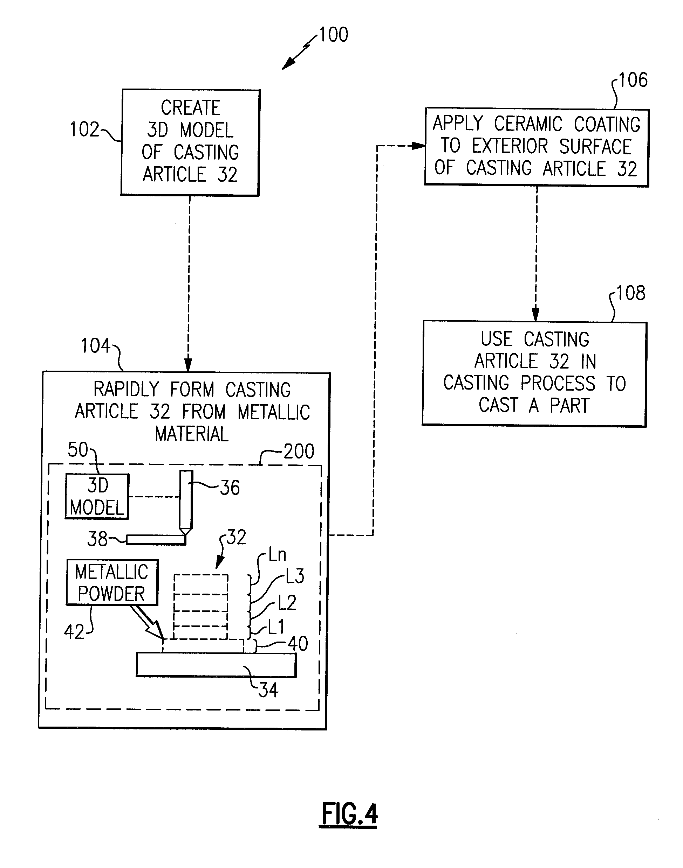

Figure 4, with continued reference to Figures 1-3, schematically depicts an example method 100 for manufacturing a casting article 32 for use in a casting process. In this disclosure, the term "casting article" is intended to describe any tooling associated with a casting system. For example, the example method 100 can be used to manufacture the core 28, the shell 30 or any other associated tooling of a casting system.

The method 100 begins at step block 102 where a 3D model 50 of the casting article 32 is created. The 3D model 50 can be made using known computer hardware and software. The 3D model 50 includes numerical data that defines the shape (including any internal surfaces) and any dimensional aspects of the casting article 32. The 3D model 50 is used to manufacture the casting article 32.

The casting article 32 is next rapidly formed out of a metallic material at step block 104. In this disclosure, the term "rapid" is intended to describe a process that can be performed in hours or days rather than weeks or months. In other words, a net-shaped casting article 32 can be manufactured from a metallic material in a relatively short period of time according to the various features and advantages of this disclosure.

In one example, the casting article 32 is manufactured using a metal deposition process that additively forms the casting article 32 layer by layer. A metal deposition system 200 can be used to rapidly cast the casting article 32. The 3D model 50 is communicated to the metal deposition system 200 and provides the necessary numerical data for manufacturing the casting article 32. A person of ordinary skill in the art would understand how to communicate the 3D model 50 to the metal deposition system 200.

The example metal deposition system 200 includes a substrate 34 and a melting device 36, such as one or more lasers. The melting device 36 melts an ingot of metallic material 38 to create a melt pool 40 on top of the substrate 34. A metallic powder 42 is injected into the melt pool 40 to form a first layer L1 of the casting article 32. A second layer L2 is formed onto the first layer L1 of the casting article 32. Additional metallic layers L3 through Ln can also be formed onto the second layer L2 to rapidly render a net-shaped casting article 32 in a layer by layer process. The total number of metallic layers Ln for any given casting article will vary depending upon the size, shape and configuration of the casting article. The metal deposition system 200 is shown schematically in order to illustrate the potential features of such a system and not to limit this disclosure in any way.

The term "metal deposition process" as used in this disclosure is intended to describe any additive metal fabrication technology. Example metal deposition processes include direct metal deposition, direct metal laser sintering, laser consolidation, selective laser melting, high energy electron beam direct metal processing, fuse deposition modeling, ion fusion formation, and fuse deposition melting. These processes are included as examples only, and the metal deposition process used in conjunction with the method 100 could include a combination of such processes or any other additive metal fabrication process.

The casting article 32 is manufactured from a metallic material. In one example, the metallic material includes a refractory metal. In another example, the metallic material includes a superalloy. Other metallic materials may also be suitable for manufacturing the casting article 32.

At step block 106, a ceramic coating is applied to an exterior surface of the casting article 32 previously formed at step block 104. Example ceramic coatings include, but are not limited to, Yttria Stabilized Zirconia (YSZ), Zirconia-based coatings, Alumina-based coatings, Silica-based coatings, Alumino-Silicate based coatings, Mullite-based coatings and Oxide-based coatings.

The ceramic coating can be applied using a deposition process, a spray process or other known coating processes, including but not limited to, air plasma spray (APS), magnetron sputtering, slurry coating, high velocity oxygen fuel (HVOF), low pressure plasma spray (LPPS), cathodic arc, chemical vapor deposition (CVD), electron beam plasma vapor deposition (EB-PVD), plasma deposition and/or impact illuminization. The ceramic coating protects the casting article 32 from alloying into the casting alloy during a casting process.

Finally, at step block 108, the rapidly formed casting article 32 is utilized in a casting process to cast a part. For example, the casting article 32 can be used in the casting system 26 depicted by Figure 3 to investment cast a gas turbine engine part 24, such as a turbine airfoil. The casting article 32 is evacuated during the casting process to render the part 24.

Figure 5 illustrates an example casting article 32 manufactured according to the exemplary method 100 described above. In this example, the casting article 32 is a core for use in a casting process. The casting article 32 can be used to form the internal cooling passages of a gas turbine engine part 24. The casting article 32 includes a metallic body 44 that defines an outer surface 46. A ceramic coating 48 is applied to the outer surface 46 of the metallic body 44 to protect the metallic body 44 from alloying into the casting alloy during the casting process. The ceramic coating 48 can be applied to the entire outer surface 46 or only a portion of the outer surface 46. It should be understood that this disclosure extends to additional tooling of a casting system, including but not limited to the shell of the casting system.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A method of manufacturing a casting article (32) for use in a casting process, comprising:
(a) rapidly forming the casting article (32) out of a metallic material; and
(b) applying a ceramic coating (48) to an exterior surface (46) of the casting article (32).

2. The method as recited in claim 1, wherein the casting article (32) is a core or a shell.

3. The method as recited in claim 1 or 2, comprising the step of:
(c) creating a 3D model of the casting article (32) prior to the step of rapidly forming the casting article (32), and wherein, optionally, said step (a) comprises:
forming the casting article using the 3D model.

4. The method as recited in any preceding claim, wherein said step (a) comprises:
forming the casting article (32) additively layer by layer.

5. The method as recited in any preceding claim, wherein said step (a) comprises:
forming the casting article (32) using a metal deposition process.

6. The method as recited in any preceding claim, wherein said step (b) comprises:
applying the ceramic coating using a deposition process or a spray process

7. A method of manufacturing a casting article (32) for use in a casting process, comprising:
(a) forming a first metallic layer (L1);
(b) adding a second metallic layer (L2) onto the first metallic layer (L1);
(c) adding additional metallic layers (Ln) onto the second metallic layer (L2) to render a net-shaped casting article (32); and
(d) applying a coating (48) to an exterior surface (46) of the net-shaped casting article (32).

8. The method as recited in claim 7, wherein the first metallic layer (L1), the second metallic layer (L2) and the additional metallic layers (L1) are formed layer by layer using a metal deposition process.

9. The method as recited in claim 7 or 8, wherein said step (d) comprises:
applying the ceramic coating using a deposition process.

10. The method as recited in claim 7 or 8, wherein said step (d) comprises:
applying the ceramic coating using a spray process.

11. The method as recited in any of claims 7 to 10, wherein said step (a) includes:
forming a melt pool (40) on top of a substrate (34); and
injecting a metallic powder (42) into the melt pool (40) to form the first metallic layer (L1) of the casting article (32).

12. The method as recited in any preceding claim, comprising the step of:
(c) using the casting article (32) or net shaped casting article (32) in a casting process to cast a part.

13. A casting system, comprising:
a casting article (32) having a metallic body (44), wherein said casting article (32) is representative of a portion of tooling of the casting system; and
a ceramic coating (48) applied to an exterior surface (46) of said metallic body (44).

14. The casting article as recited in claim 13, wherein said metallic body (44) includes a refractory metal.

15. The casting article as recited in claim 13, wherein said metallic body (44) includes a superalloy.
